# DEMANDE DE BREVET EUROPEEN

(11) **EP 3 238 991 A1**
(43) Date de publication de la demande: **01.11.2017**
(21) Numéro de dépôt: 17167381.7
(22) Date de dépôt: 20.04.2017
(51) Int. Cl.: B60Q 1/00, F21S 8/10

(54) **MODULE LUMINEUX ROTATIF**

(30) Priorité: 28.04.2016 FR 1653833
(71) Demandeur: Valeo Vision, 93012 Bobigny Cedex (FR)
(72) Inventeur: CHOLLEY, Benoit, 49000 ANGERS (FR)

(57) **Abrégé**

Un module lumineux (2) pour véhicule automobile comprend au moins une source de lumière (8) apte à émettre des rayons lumineux, un support (10) portant ladite source de lumière, des éléments de déviation optique (6) agencés de manière à dévier les rayons lumineux émis par la source de lumière pour former un faisceau lumineux projeté en sortie du module lumineux, et des éléments de guidage pour guider en rotation les éléments de déviation optique (6) autour d'un axe de rotation (4), afin de déplacer transversalement le faisceau lumineux projeté.

Selon l'invention, les éléments de guidage en rotation comportent un premier élément de guidage (24) porté par le support (10) et configuré pour coopérer avec un deuxième élément de guidage (26) porté par les éléments de déviation optique (6).

## Description

L'invention a trait au domaine de l'éclairage et/ou de la signalisation, notamment pour véhicule automobile. Plus particulièrement, l'invention a trait à un module lumineux pour véhicule automobile, ainsi qu'à un dispositif lumineux, notamment d'éclairage et/ou de signalisation comprenant un tel module lumineux.

Des dispositifs d'éclairage et/ou de signalisation peuvent comporter un ou plusieurs modules lumineux montés rotatifs autour d'un axe, notamment pour répondre à des problématiques d'éclairage adaptatif. Notamment, le document EP 295 74 64 décrit un dispositif lumineux, notamment d'éclairage et/ou de signalisation pour véhicule automobile, qui comprend un boîtier et un ensemble d'au moins deux modules lumineux, dans lequel au moins une partie de chaque module lumineux est montée mobile en rotation autour d'un axe sous l'effet d'un actionneur pour déplacer transversalement le faisceau lumineux correspondant en sortie du module lumineux. Un dispositif de commande associé est apte à élaborer distinctement pour chaque module lumineux des instructions de commande d'éclairage spécifique en fonction des conditions de circulation.

L'invention a pour objectif de proposer une amélioration aux dispositifs d'éclairage et/ou de signalisation pour véhicule automobile connus de l'art antérieur, notamment en ce qui concerne le guidage en rotation d'un module lumineux pour un déplacement transversal du faisceau lumineux qu'il génère.

Dans ce contexte, l'invention a pour objet un module lumineux notamment pour véhicule automobile, comprenant au moins une source de lumière apte à émettre des rayons lumineux, au moins un support portant ladite source de lumière, au moins un élément de déviation optique agencé de manière à dévier les rayons lumineux émis par la au moins une source de lumière pour former un faisceau lumineux projeté en sortie du module lumineux, et des éléments de guidage pour guider en rotation l'élément de déviation optique autour d'un axe de rotation, afin de déplacer transversalement le faisceau lumineux projeté.

Selon l'invention des éléments de guidage en rotation sont formés par un premier élément de guidage porté par le support et configuré pour coopérer avec un deuxième élément de guidage porté par les éléments de déviation optique.

Par déplacement transversal du faisceau lumineux, on comprend que l'orientation générale du faisceau projeté en sortie du module, c'est-à-dire en direction de la scène de route en amont du véhicule, varie dans un plan perpendiculaire à l'axe de rotation des éléments de déviation optique.

On s'assure ainsi, au voisinage de la source de lumière, que les éléments de déviation optique tournent avec précision autour de l'axe de rotation, notamment grâce aux éléments de guidage. L'invention permet la libre rotation du module lumineux autour de l'axe de rotation jusqu'à 360°. Selon l'invention, les éléments de guidage sont peu encombrants et nécessitent l'assemblage d'un nombre réduit de pièces, et cela a notamment pour bénéfice de réduire les coûts de production.

Les éléments de déviation optique sont mobiles en rotation sous l'effet d'un actionneur, qui peut notamment comporter un arbre de sortie s'étendant le long de l'axe de rotation et portant les éléments de déviation optique.

Avantageusement, l'actionneur et les éléments de guidage en rotation sont disposés de part et d'autre des éléments de déviation optique le long de l'axe de rotation. On comprend que l'on évite ainsi un agencement en porte-à-faux, dans lequel la partie des éléments de déviation optique à l'opposé de l'actionneur aurait tendance à se décaler de l'axe de rotation.

Les éléments de déviation optique peuvent suivre un chemin de rotation défini par les éléments de guidage qui permettent ainsi un centrage et une bonne focalisation de la source de lumière dirigée vers les éléments de déviation optique.

En outre l'invention possède au moins l'une des caractéristiques suivantes, considérées isolément ou en combinaison :
- le premier élément de guidage du module lumineux comporte une piste de guidage au moins partiellement circulaire et contre laquelle le deuxième élément de guidage est apte à venir en appui ; par « partiellement circulaire », on entend que la piste de guidage peut être interrompue et ne former qu'un arc de cercle, ou bien qu'elle peut être fermée et présenter la forme d'une piste circulaire régulière, ou bien encore qu'elle peut être fermée et présenter une partie circulaire servant au guidage en rotation et une autre partie ne servant pas au guidage ;
- la piste de guidage est formée à la périphérie d'un bossage cylindrique agencé en saillie d'une face interne du support tournée vers les éléments de déviation optique ;
- la source de lumière est disposée sur une face d'extrémité transversale du bossage cylindrique ;
- la source de lumière est disposée au voisinage du centre de l'arc de cercle définissant le contour de la piste de guidage au moins partiellement circulaire ;
- la piste de guidage est formée par une face d'une paroi annulaire qui s'étend en saillie d'une face interne du support et à l'intérieur de laquelle est disposée la source de lumière ;
- le deuxième élément de guidage est rapporté contre la piste de guidage au moins partiellement circulaire, correspondant au premier élément de guidage ;
- le deuxième élément de guidage comporte au moins un pion solidaire des éléments de déviation optique ; le au moins un pion est porté par un bras prolongeant transversalement les éléments de déviation optique en leur extrémité en regard du support ;
- le au moins un pion présente une forme de révolution autour d'un axe parallèle à l'axe de rotation ;
- le deuxième élément de guidage peut comporter trois pions ;
- la source de lumière est une diode électroluminescente portée par une première plaque de circuits imprimés ; dans une variante du mode de réalisation, la première plaque de circuits imprimés peut porter plusieurs diodes électroluminescentes ;
- le support est réalisé en un matériau métallique conducteur de chaleur, notamment en aluminium, de manière à former un dissipateur thermique ;
- les éléments de déviation optique peuvent consister en un réflecteur de forme sensiblement elliptique, la source de lumière étant disposée sensiblement au voisinage d'un premier foyer dudit réflecteur.

On pourra prévoir que les éléments de déviation optique soient montés mobiles en rotation autour d'un axe de rotation additionnel distinct du premier axe de rotation tel qu'il vient d'être défini, et notamment sensiblement perpendiculaire à ce premier axe de rotation, afin de déplacer, ici verticalement, le faisceau lumineux correspondant en sortie du module lumineux. Ainsi, le faisceau lumineux est apte à être déplacé verticalement et/ou transversalement ;

Le support possède ainsi les caractéristiques avantageuses d'être porteur des éléments de guidage en rotation selon un premier axe de rotation permettant le déplacement transversal du faisceau de lumière et/ou d'être porteur d'un deuxième axe de rotation permettant le déplacement vertical du faisceau de lumière correspondant en sortie de module.

Selon une autre série de caractéristiques, prises seules ou en combinaison avec les caractéristiques qui précèdent, propres à la source de lumière, on pourra prévoir que :
- la source de lumière comprend au moins un élément émissif à semi-conducteur ;
- la source de lumière est une diode électroluminescente ;
- le module comprend un substrat de connexion électrique apte à alimenter électriquement la source de lumière ;
- le substrat de connexion est une carte de circuit imprimé, une carte de circuit imprimé flexible ou un dispositif d'interconnexion à géométrie variable ;
- la source lumineuse est agencée sur le substrat de connexion électrique.

L'invention porte également sur un dispositif lumineux, notamment d'éclairage et/ou de signalisation pour véhicule automobile, comprenant au moins un module lumineux selon l'invention, au moins une platine et au moins un palier. Le dispositif peut comporter notamment un boîtier définissant avec une glace de fermeture un logement de réception d'au moins un module lumineux. Le faisceau lumineux projeté en sortie de module lumineux est configuré pour traverser cette glace de fermeture avant d'être projeté sur la scène de route en amont du véhicule. De préférence, ce dispositif lumineux comprend trois modules lumineux selon l'invention. Notamment dans ce cas, et dès lors que l'on a plusieurs modules lumineux agencés dans un dispositif lumineux commun, les faisceaux lumineux projetés par chacun des modules sont configurés pour former un faisceau lumineux global, répondant notamment à des normes règlementaires d'éclairage et/ou de signalisation de véhicule automobile.

D'autres caractéristiques et avantages de la présente invention apparaitront plus clairement à l'aide de la description et des dessins parmi lesquels :
- la figure 1 est une vue en perspective de trois quart avant d'un module lumineux, selon un mode de réalisation de l'invention ;
- la figure 2 est une vue en perspective, de côté, d'un détail du module lumineux représenté sur la figure 1 ; et
- la figure 3 est une vue en perspective de trois quart avant d'un dispositif d'éclairage et/ou de signalisation comportant un ensemble de trois modules lumineux selon le mode de réalisation de l'invention représenté sur les figures 1 à 2.

Dans la description qui va suivre, on adoptera à titre non limitatif une orientation longitudinale, verticale et transversale selon l'orientation traditionnellement utilisée dans l'automobile. De plus, les termes inférieur et supérieur doivent être interprétés lorsque l'objet est en position normale d'utilisation.

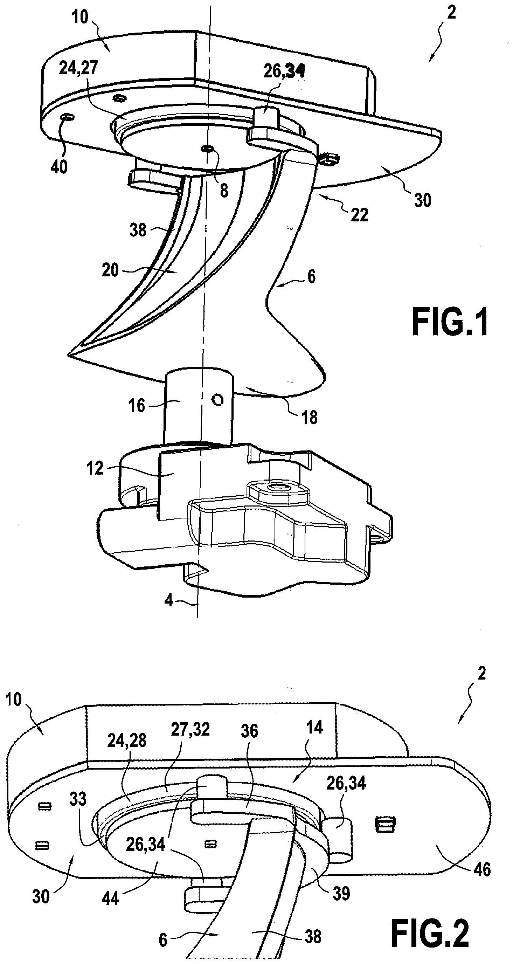

Les figures 1 et 2 représentent un module lumineux 2 mobile en rotation autour d'un axe de rotation 4.

Ce module lumineux 2 comprend des éléments de déviation optique 6 de rayons émis par une source de lumière 8 portée par un support 10. Les éléments de déviation optique 6 sont agencés autour de l'axe de rotation 4 et ils sont entrainés en rotation par un actionneur 12 autour de l'axe de rotation 4 pour déplacer transversalement un faisceau lumineux correspondant en sortie du module lumineux 2.

Les éléments de déviation optique 6 coopèrent avec le support 10 venant en recouvrement du module lumineux 2, notamment par l'intermédiaire de éléments de guidage en rotation 14 (visibles sur les figures 1 et 2). On comprend que le support 10 est d'une part porteur de la source de lumière 8, qui émet des rayons en direction des éléments de déviation optique 6, et d'autre part porteur d'une partie des éléments de guidage en rotation 14 des éléments de déviation optique 6 autour de l'axe de rotation 4. Les éléments de déviation optique 6, qui seront décrit plus en détails ci-après, sont disposés entre les éléments de guidage 14 et l'actionneur 12 relativement à leur agencement le long de l'axe de rotation 4.

Des moyens de commande (ici non représentés) pilotent l'actionneur 12. Un mouvement est transmis par cet actionneur 12 à un arbre de sortie 16, qui transmet aux éléments de déviation optique 6 le mouvement de rotation commandé autour de l'axe de rotation 4. Tel que représenté, l'arbre de sortie 16 est rendu solidaire des éléments de déviation optique 6 au niveau d'une première extrémité 18, ici considérée comme inférieure par rapport à l'orientation définie précédemment.

Les éléments de déviation optique 6 consistent ici en un réflecteur elliptique ou parabolique, avec une face réfléchissante 20 configurée pour réfléchir les rayons de lumière émis par la source de lumière 8, qui est sensiblement disposée au voisinage d'un premier foyer des éléments de déviation optique 6. Un faisceau lumineux est ainsi généré pour former un faisceau règlementaire du point de vue de l'éclairage et/ou de la signalisation d'un véhicule automobile.

On notera que sans sortir du contexte de l'invention, les éléments de déviation optique 6 peuvent prendre différentes formes dès lors qu'ils sont entraînés en rotation par un actionneur 12 à une première extrémité relativement à l'axe de rotation 4 et que leur agencement par rapport à la source de lumière permet de former un faisceau règlementaire.

Au voisinage d'une deuxième extrémité 22 des éléments de déviation optique 6, ici l'extrémité désignée supérieure selon l'orientation décrite précédemment, c'est-à-dire à l'extrémité opposée à la première extrémité 18 où s'étend l'actionneur 12, sont disposés les éléments de guidage en rotation 14 par l'intermédiaire desquels les éléments de déviation optique 6 coopèrent avec le support 10 et qui seront décrits plus en détails ci-après.

On comprend que la disposition des éléments de guidage en rotation 14 et des moyens d'entraînement que forment l'actionneur 12 et l'arbre de sortie 16, de part et d'autre des éléments de déviation optique 6, permet un guidage optimal en rotation des éléments de déviation optique autour de l'axe de rotation.

Les éléments de guidage 14 et l'arbre de sortie 16 rendent aptes les éléments de déviation optique 6 à effectuer une rotation allant jusqu'à 360 degrés autour de l'axe de rotation 4, sensiblement vertical, sans effort sur l'actionneur 12, et avec une grande précision dans le positionnement relatif des éléments de déviation optique 6 et de la source de lumière 8, avantageusement centrée sur l'axe de rotation 4.

Les éléments de déviation 6 suivent ainsi un mouvement de rotation actionné par l'actionneur 12 et transmis par l'arbre de sortie 16, ce mouvement de rotation état facilité par la présence des éléments de guidage 14.

Tel que représenté sur les figures 1 à 3, le support 10 vient en recouvrement du module lumineux 2. On notera que le support 10 peut former un dissipateur thermique réalisé en un matériau métallique conducteur de chaleur, notamment en aluminium. Selon l'invention, le support est d'une part porteur d'au moins une source de lumière et d'autre part porteur d'une partie des éléments de guidage en rotation 14.

Lesdits éléments de guidage en rotation 14 permettent aux éléments de déviation optique 6 de rester centrés sur l'axe de rotation 4 et donc permettent à la source de lumière 8 de reste positionnée sensiblement au foyer de ces éléments de déviation optique. Ces éléments de guidage 14 participent au guidage en rotation des éléments de déviation optique 6, autour de l'axe de rotation 4, ici sensiblement vertical, afin de déplacer transversalement le faisceau lumineux en sortie de module lumineux 2.

Les éléments de guidage en rotation 14 consistent selon l'invention en un premier élément de guidage 24 porté par le support 10 et en un deuxième élément de guidage 26 porté par les éléments de déviation optique 6.

Le premier élément de guidage 24 consiste en une piste de guidage circulaire 27 réalisée ici sur la tranche d'un bossage cylindrique 28 qui s'étend en saillie d'une face interne 30 du support 10. On entend par face interne du support la face tournée vers les éléments de déviation optique. Le bossage 28 a une forme cylindrique, de section circulaire, et il présente une face périphérique annulaire 32 qui s'étend depuis la face interne 30 du support 10, et qui forme la piste de guidage circulaire, et une face d'extrémité transversale 33, sensiblement parallèle à la face interne 30 du support 10. Le bossage cylindrique 28 présente une hauteur déterminée, ladite hauteur correspondant à la dimension du bossage selon la direction de l'axe de rotation 4, et donc au décalage entre la face transversale 33 du bossage et la face interne 30 du support. Le bossage cylindrique annulaire 28 est centré sur l'axe de rotation 4 et il porte, sur sa face d'extrémité transversale 33, la source de lumière 8. La présence du bossage cylindrique comme support de la source de lumière implique une disposition étagée dans laquelle la source de lumière est décalée axialement, selon l'axe de rotation, par rapport à la face interne 30 du support 10. Cette disposition étagée permet la création d'une piste de guidage en rotation sur un flanc du bossage cylindrique, qui forme un support de la source de lumière.

Le deuxième élément de guidage 26 consiste en au moins un pion 34 porté par les éléments de déviation optique 6 au voisinage de l'extrémité supérieure 22 de ces éléments de déviation optique. Chaque pion 34 consiste en une excroissance pouvant être venue de matière avec ou rapportée sur les éléments de déviation optique 6, et dont l'agencement et la forme le rendent apte à coopérer avec le premier élément de guidage 24 porté par le support 10, tel qu'il est décrit ci-dessus, et notamment apte à coopérer avec la face périphérique annulaire 32. Chaque pion 34 présente une forme de cylindre de révolution autour d'un axe parallèle à l'axe de rotation 4, de sorte que la génératrice de ce pion est sensiblement parallèle à la face périphérique annulaire 32 du bossage cylindrique.

A l'extrémité supérieure 22 des éléments de déviation optique, un bras 36 prolonge sensiblement perpendiculairement la face réfléchissante 20, en s'étendant sensiblement parallèlement au support 10. Le bras 36 est plus particulièrement un prolongement d'un flanc latéral 38 délimitant la face réfléchissante 20 des éléments de déviation optique 6. Tel que représenté sur les figures 1 et 2, les éléments de déviation optique 6 comportent à l'extrémité supérieure 22 deux bras 36 prolongeant les deux flancs latéraux 38 opposés des éléments de déviation optique 6.

Tel que cela est plus visible sur la figure 2, le deuxième élément de guidage 26 comporte avantageusement une pluralité de pions 34, et il peut notamment comporter trois pions disposés à distance les uns des autres sur un arc de cercle de rayon légèrement supérieur à celui défini par la face périphérique annulaire 32 du premier élément de guidage 24, de sorte que les pions sont susceptibles d'être en contact ponctuel avec la face périphérique annulaire 32, qui forme une bande de roulement contre les pions.

La présence de trois pions permet un guidage en rotation performant. Dans l'exemple illustré, deux des trois pions 34 sont diamétralement opposés, de part et d'autre de l'axe de rotation 4, et le troisième pion est situé sur l'arc de cercle de positionnement des pions, entre ces deux pions diamétralement opposés, avec un angle d'écartement de 90°. Dans une variante de réalisation, les pions 34 pourraient être disposés pour être régulièrement répartis sur tout le pourtour du bossage cylindrique 28 lorsque le module est assemblé, c'est-à-dire que les pions auraient un angle d'écartement entre eux de 120°.

Tel que cela est visible sur la figure 2, deux pions 34 sont portés respectivement par un bras 36 prolongeant un flanc latéral 38 délimitant la face réfléchissante 20 des éléments de déviation optique 6. Et le troisième pion est porté par un bord 39 prolongeant l'extrémité supérieure 22 des éléments de déviation optique à l'opposé de la face réfléchissante. Lorsque l'ensemble du module est monté, on comprend que le premier élément de guidage 24, et plus particulièrement la face périphérique annulaire 32 du bossage cylindrique 28 forme une piste de guidage contre laquelle sont rapportés les pions 34 correspondant ici au deuxième élément de guidage 26 (visible sur les figures 1 et 2). Lorsque les éléments de déviation optique 6 sont rendus mobiles en rotation par l'effet de l'actionneur 12, les pions portés par l'extrémité supérieure 22 des éléments de déviation optique 6 suivent le mouvement de rotation et la configuration des pions, notamment disposés de part et d'autre de l'axe de rotation, implique qu'ils restent au contact du bossage cylindrique 28, qui lui reste fixe avec le support. Les pions sont ainsi destinés à suivre la piste de guidage autour du bossage 28 et donc à suivre une trajectoire circulaire.

Il importe que les pions 34 soient au contact constant de la face périphérique annulaire 32 du bossage cylindrique 28, et il convient alors de s'assurer que les hauteurs des pions et du bossage permettent ce contact, sur une portée suffisamment grande pour éviter que les pions ne s'échappent, lorsque le module est assemblé.

La face interne 30 du support s'étend depuis le bossage cylindrique 28 dans un plan transversal, au moins vers l'avant du véhicule lorsque le module lumineux 2 est mis en place dans le véhicule. Cette face interne porte au moins une source de lumière additionnelle 40. On comprendra que la dimension de la face interne devra autoriser la disposition de cette source de lumière additionnelle de sorte qu'elle soit décalée transversalement par rapport à l'axe de rotation.

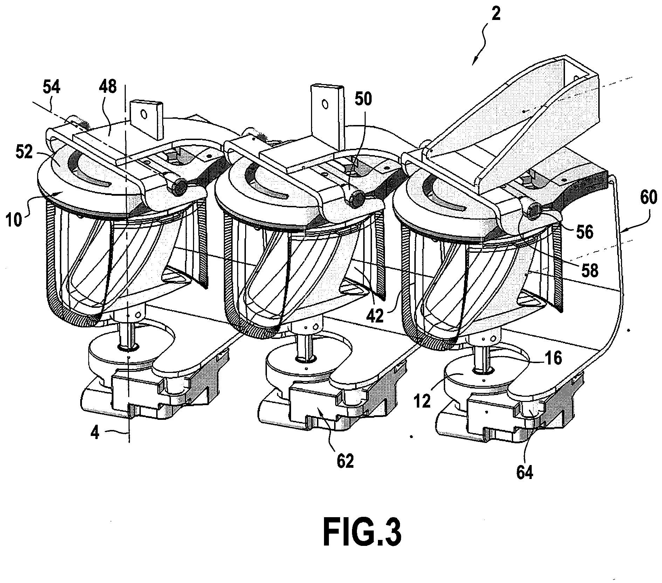

Il pourra être prévu que le module lumineux 2 comprenne un écran 42 (visible sur la figure 3) disposé en regard de cette source de lumière additionnelle, tel que cela sera décrit ci-après.

La source de lumière 8 et les sources de lumière additionnelles 40 peuvent consister en des sources à semi-conducteur du type diode électroluminescentes. Dans ce cas, on pourra prévoir de disposer, sur la face d'extrémité 33 du bossage cylindrique, une première plaque de circuits imprimés 44 porteuse de la source de lumière 8, et, sur la face interne 30 du support 10, une deuxième plaque de circuits imprimés 46 porteuse de la ou des sources de lumière additionnelles 40. Dans l'exemple illustré, ces deux plaques de circuits imprimées sont dans une disposition étagée, séparée axialement de la hauteur de la piste de guidage formée par la face périphérique annulaire 32 du bossage cylindrique 28.

La source de lumière 8 est sensiblement alignée sur l'axe de rotation 4. On entend par l'expression " sensiblement alignée " que la distance entre le centre géométrique de la source de lumière telle qu'une diode électroluminescente et l'axe de rotation 4 du module lumineux 2 n'est pas supérieur aux dimensions de la diode électroluminescente.

Les sources de lumière sont fixes dans le module lumineux 2 et leurs rayons lumineux émis sont orientés à l'opposé du support 10. Ces sources de lumière 8, 40 peuvent avoir dans le module lumineux 2 des fonctions d'éclairages et/ou de signalisation distinctes suivant leurs localisations et les instructions de commande en fonctions des conditions de la route. Notamment, la source de lumière 8 est agencée pour émettre des rayons lumineux vers la face réfléchissante 20 des éléments de déviation optique 6, tandis que la ou les sources de lumière additionnelles sont agencées pour émettre à l'intérieur de l'écran translucide 42 participant à des fonctions esthétiques.

Le module lumineux selon l'invention, tel qu'il vient d'être décrit, participe à la formation d'un dispositif d'éclairage et/ou de signalisation, tel qu'illustré sur la figure 3, en ce qu'il est disposé dans un boîtier (non représenté) de projecteur de véhicule automobile fermé par une glace de projection, de manière à définir un logement du ou des modules selon l'invention. On comprend que l'on pourra disposer une pluralité de module lumineux tel qu'ils viennent d'être décrits pour former un dispositif d'éclairage et /ou de signalisation. Notons qu'il est avantageux que les deux projecteurs, gauche et droit, comporte un dispositif équivalent, avec un nombre équivalent de modules lumineux.

Chaque module lumineux 2 est associé à une platine 48, ou une portion de platine 48, qui vient en recouvrement du support 10. La platine 48 est fixée au boîtier et est configurée pour positionner le support 10 par rapport au projecteur.

Tel que représenté sur la figure 3, le dispositif comporte une platine unique qui recouvre l'ensemble des modules lumineux 2 compris dans le boîtier, mais on comprendra que chaque module lumineux 2 peut être associé à une platine individuelle, indépendante des autres platines.

Chacun des trois modules lumineux 2 est mobile en rotation autour d'un axe de rotation 4 qui lui est propre, et dans au moins un de ces modules lumineux, cette rotation est facilitée par des éléments 14 tels qu'ils viennent d'être décrits. Un axe de rotation 4 a été représenté sur la figure 3 pour l'un des modules lumineux 2, et avantageusement, l'axe de rotation 4 propre à chaque module lumineux 2 est sensiblement parallèle de l'axe de rotation 4 des modules lumineux 2 voisins.

Dans l'exemple d'application illustré, le support 10 présente des excroissances 50 en saillies d'une face externe 52 du support 10, diamétralement opposées, et alignées pour former un axe de rotation additionnel 54 apte à coopérer avec des paliers qui seront décrits ci-après. Les excroissances 50 peuvent consister en des pions cylindriques.

On comprendra que ces excroissances sont ici réalisées pour former un axe de rotation distinct d'un premier axe de rotation tel qu'il a été précédemment défini et autour duquel les éléments de déviation optique sont configurés pour tourner, via l'actionneur 12 et les éléments de guidage en rotation 14. L'axe de rotation additionnel 54 permet au module lumineux 2 de pivoter et d'assurer un mouvement vertical du faisceau lumineux en sortie de module lumineux 2.

Bien entendu, la réalisation optimale de la fonction de guidage en rotation autour du premier axe de rotation par les éléments 14 tels qu'ils ont été décrits précédemment ne nécessite pas la présence de ces excroissances et de ce deuxième axe de rotation. On comprend que la présence de ces excroissances est facultative. Toutefois, il est intéressant de noter que la mise en oeuvre de ce deuxième mouvement de rotation est facilité par le guidage en rotation très précis autour du premier axe, puisque la rotation autour du deuxième axe serait difficile à mettre en oeuvre si un effet de porte à faux se produisait lors de la réalisation de la rotation autour du premier axe.

Dans l'exemple d'application illustré, la platine 48 participe à la mise en rotation du ou des module lumineux autour de l'axe de rotation additionnel 54 qui leur est propre. A cet effet, la platine 48 est porteuse d'au moins deux pattes de réception 56, venues de matière avec ou rapportées et rendues solidaires de la platine. Pour un module lumineux donné, deux pattes de réception 56 sont agencées de part et d'autre du module pour former des paliers de réception d'éléments en saillie du support 10, notamment les excroissances 50, telles que décrites précédemment. Les deux pattes de réception 56 présentent chacune une forme en crochet définissant une gorge 58 dans laquelle s'insère une des excroissances 50. Les gorges 58 sont agencées de façon coaxiale, et l'agencement des pattes de réception 56 et des excroissances 50 définit l'axe de rotation additionnel 54 pour le module lumineux 2, qui dans ce mode réalisation, est mobile en rotation suivant deux axes de rotations 4 et 54, distincts et non parallèles, et avantageusement perpendiculaires entre eux.

Dans une configuration donnée, l'axe de rotation 4 est sensiblement vertical et permet la rotation horizontale (dans le sens gauche-droite et droite-gauche) du faisceau lumineux en sortie du module lumineux 2 correspondant, au sein du dispositif lumineux. L'axe de rotation additionnel 54 est sensiblement horizontal et permet le déplacement vertical (dans le sens haut-bas et bas-haut) du faisceau lumineux en sortie de module lumineux 2 correspondant, au sein du dispositif lumineux.

Tel que cela est visible sur la figure 3, le module lumineux 2 selon l'invention, peut comporter un écran 42 transparent sur le chemin de sortie du faisceau lumineux du module lumineux 2. Cet écran 42 est agencé de manière à recevoir les rayons émis par la ou les sources de lumière additionnelles 40. L'écran 42 est ainsi destiné à produire un effet de style lorsque les sources de lumière additionnelles 40 sont allumées, sans gêner la formation d'un faisceau règlementaire lorsque la source de lumière 8 est allumée. On comprend que la présence d'un écran 42 n'a ici qu'une fonction additionnelle et que le module lumineux pourrait, tel qu'illustré sur les figures 1 à 3, ne pas comporter un tel écran en regard des éléments de déviation optique 6.

Le module lumineux 2 comporte en outre un dispositif de commande apte à formuler, sur la base d'informations reçues en provenance de capteurs d'état du véhicule des instructions de commande à envoyer à l'actionneur 12 et à des moyens d'actionnement (non représentés) responsable du mouvement de rotation autour de l'axe de rotation additionnel 54. Les instructions consistent à piloter la rotation du module lumineux 2 se répercutant sur l'axe de rotation 4 et/ou sur l'axe de rotation additionnel 54.

La fonction d'éclairage peut alors être directionnelle, grâce à l'actionneur 12 et aux moyens d'actionnements propres au mouvement de rotation autour de l'axe de rotation additionnel 54 du module lumineux 2. Les mouvements de rotation autour du premier axe de rotation 4 et autour de l'axe de rotation additionnel 54 peuvent être simultanés et calibrés entre les deux axes ou totalement indépendants.

La rotation simultanée est notamment possible du fait de l'entrainement en rotation de l'actionneur 12 avec le module lumineux 2 lorsque celui-ci est entraîné en rotation autour de l'axe de rotation additionnel 54. On comprendra que lorsque le module lumineux 2 est entraîné en rotation autour de l'axe de rotation additionnel 54, la rotation selon l'axe de rotation 4 est possible notamment grâce à une configuration prévue à cet effet.

Nous allons décrire maintenant le fonctionnement du dispositif d'éclairage et/ou de signalisation, et notamment un premier mode dans lequel le faisceau lumineux en sortie de module lumineux 2 est décalé transversalement, et un deuxième mode dans lequel le faisceau lumineux en sortie de module lumineux est décalé verticalement. Ces deux modes de fonctionnement peuvent fonctionner simultanément ou alternativement. Le premier mode de fonctionnement consiste en ce que l'actionneur 12 transmet à l'arbre de sortie 16 un mouvement de rotation, ledit arbre de sortie 16 entraînant en rotation les éléments de déviation optique 6 autour de l'axe de rotation 4, la rotation étant guidée selon un chemin défini par la configuration des éléments de guidage en rotation 14. Les éléments de déviation optique 6 tournent autour de l'axe de rotation 4 d'un angle défini par les instructions de commande envoyées à l'actionneur, tandis que le support 10 et les sources de lumière qu'il porte restent fixes. Un support équerre 60 est agencé entre le support, dont il est solidaire à l'une de ses extrémités, et un support de fixation 62 de l'actionneur 12, dont il est solidaire par l'intermédiaire de moyens de fixation, ici un fût de vissage agencé entre le support équerre et le support de fixation, et traversé par une vis de serrage non visible qui fixe le support équerre sur le support de fixation. Ce support équerre reste fixe pendant la rotation des éléments de déviation optique autour de l'axe de rotation 4. Cette rotation des éléments de déviation optique autour de l'axe de rotation 4 génère un déplacement des rayons émis par la source de lumière 8 de sorte que l'on peut générer un mouvement transversal du faisceau en sortie du dispositif d'éclairage et/ou de signalisation.

Le deuxième mode de fonctionnement consiste en ce que les moyens d'actionnement, non représentés sur la figure 4, sont aptes à pousser sur le support équerre 60 en sa partie basse, à l'opposé du support.

Cette poussée sur le support équerre 60 entraîne un pivotement de l'ensemble du module autour de l'axe de rotation additionnel 54. Les excroissances 50 en saillie de du support 10 tournent dans les paliers 56 fixes portés par la platine 48. La partie basse du support équerre pivote, entraînant dans sa rotation autour de l'axe de rotation additionnel 54 le support de fixation 62 de l'actionneur 12, l'actionneur 12, l'arbre de sortie 16, les éléments de déviation optique 6, les éléments de guidage en rotation 14 et le support 10. On comprend que lorsque le support équerre pivote, le support 10 est également entraîné en rotation autour du deuxième axe de rotation, ce qui entraîne dans la même rotation les éléments de guidage en rotation 14, puis les éléments de déviation optique et l'actionneur. Tous ces composants sont ainsi pris comme un seul ensemble solidaire en rotation autour de l'axe de rotation additionnel 54 pour réaliser un déplacement vertical du faisceau lumineux en sortie de module lumineux 2.

La description qui précède explique clairement comment l'invention permet d'atteindre les objectifs qu'elle s'est fixée et notamment de proposer un module lumineux 2 d'éclairage et/ou de signalisation mobile en rotation selon au moins un axe de rotation grâce à l'actionneur 12, et sans contrainte grâce à des éléments 14. Selon l'invention, la localisation des éléments 14 à une extrémité des éléments de déviation optique à l'opposé de l'arbre de sortie 16 et de l'actionneur 12 permet un maintien en partie supérieure des éléments de déviation optique 6 lors de la rotation et d'ajuster au mieux la position de la source de lumière au foyer des éléments de déviation optique.

Selon des instructions de commande d'éclairage des sources de lumière et selon les instructions de commande en rotation du module lumineux 2, l'invention permet le guidage précis en rotation du module lumineux 2 ayant pour effet la réalisation de différentes combinaisons de fonctions et d'élargissement de la zone d'éclairage. On comprend que le fait que le module lumineux 2 soit mobile en rotation transversalement et verticalement, permet de couvrir une grande zone d'éclairage et/ou de signalisation tout en respectant des contraintes d'encombrement du dispositif lumineux

Par ailleurs, l'invention permet avec la configuration particulière des éléments 14, un empilement du support 10 et des différents composants des éléments 14 ayant pour effet de proposer avantageusement un ensemble compact et avec un jeu minime entre les différentes pièces du module lumineux 2, provoquant ainsi moins de vibrations et d'usure prématurée entre les différents composants. La fiabilité du mouvement de rotation le long de la piste de guidage autour de l'axe de rotation 4 du module lumineux 2 est alors augmentée.

Ces avantages seraient également obtenus par une ou plusieurs variantes de réalisation, et notamment celles qui vont être listées ci-dessous, sans que cette liste soit toutefois exhaustive, étant entendu que d'autres variantes non décrites pourraient être dans le contexte de l'invention, dès lors que des éléments de guidage en rotation coopérants entre eux sont prévus sur les éléments de déviation optique et sur le support de la source de lumière projetant des rayons sur ces éléments de déviation optique.

Dans une première variante non représentée, la piste de guidage circulaire 27 formant le premier élément de guidage en rotation peut prendre la forme d'un sillon creusé dans la face interne 30 du support 10, en lieu et place de la face latérale périphérique du bossage cylindrique tel qu'il a été décrit précédemment. Les pions portés par les éléments de déviation optique seront configurés pour pouvoir être logés dans ce sillon et guidés en rotation lors du mouvement de rotation des éléments de déviation optique.

Dans une autre variante, également non représentée ici, on pourra prévoir que le bossage cylindrique est creux, de sorte que seule une paroi annulaire s'étend en saillie de la face interne du support, et on pourra prévoir dans ce contexte que la source de lumière, ainsi que la première carte de circuits imprimés associée éventuellement, est disposée à l'intérieur de cette paroi annulaire, en prenant appui sur la face interne 30 du support 10. On pourrait dans ce cas envisager également que les pions 34 soient mis indifféremment mis au contact d'une face interne de cette paroi annulaire ou d'une face externe tel que cela a été décrit précédemment.

Enfin, on pourra prévoir une butée disposée sur le chemin des pions 34 lorsqu'ils courent le long de la piste de guidage. Cette butée permet alors de limiter le mouvement de rotation des éléments de déviation optique 6. Cette butée pourra notamment être formée en saillie de la face interne 30 du support 10 et agencée contre la face périphérique annulaire 32 du bossage cylindrique, lorsque la piste de guidage circulaire est formée par la face périphérique annulaire du bossage.

Dans chacune de ces variantes qui viennent d'être décrites, tout comme dans le mode de réalisation présenté précédemment, on pourra prévoir que la piste de guidage n'est que partiellement circulaire, étant entendu que la partie effective de guidage est formé par un arc de cercle. La source de lumière est alors disposée au voisinage du centre de cet arc de cercle définissant le contour de la piste de guidage au moins partiellement circulaire.

## Revendications

1. Module lumineux (2) pour véhicule automobile comprenant
- au moins une source de lumière (8) apte à émettre des rayons lumineux,
- au moins un support (10) portant ladite source de lumière (8),
- au moins un élément de déviation optique (6) agencé de manière à dévier les rayons lumineux émis par la au moins une source de lumière pour former un faisceau lumineux projeté en sortie du module lumineux,
- des éléments de guidage (14) pour guider en rotation l'élément de déviation optique (6) autour d'un axe de rotation (4), afin de déplacer transversalement le faisceau lumineux projeté,
**caractérisé en ce que** les éléments de guidage en rotation (14) comportent un premier élément de guidage (24) porté par le support (10) et configuré pour coopérer avec un deuxième élément de guidage (26) porté par les éléments de déviation optique (6).

2. Module lumineux (2) selon la revendication précédente, **caractérisé en ce que** lesdits éléments de déviation optique (6) sont mobiles en rotation sous l'effet d'un actionneur (12).

3. Module lumineux (2) selon la revendication précédente, **caractérisé en ce que** l'actionneur (12) comporte un arbre de sortie (16) s'étendant le long de l'axe de rotation (4) et portant les éléments de déviation optique (6).

4. Module lumineux (2) selon la revendication précédente, **caractérisé en ce que** l'arbre de sortie (16) et les éléments (14) en rotation sont disposés de part et d'autre des éléments de déviation optique (6) le long de l'axe de rotation (4).

5. Module lumineux (2) selon l'une des revendications précédentes, **caractérisé en ce que** le deuxième élément de guidage (26) comporte au moins un pion (34) solidaire des éléments de déviation optique (6).

6. Module lumineux (2) selon la revendication précédente, **caractérisé en ce que** le au moins un pion (34) est porté par un bras (36) prolongeant transversalement les éléments de déviation optique (6) en leur extrémité (22) en regard du support (10).

7. Module lumineux (2) selon la revendication précédente, **caractérisé en ce que** le au moins un pion (34) présente une forme de révolution autour d'un axe parallèle à l'axe de rotation (4).

8. Module lumineux (2) selon l'une des revendications précédentes, **caractérisé en ce que** le premier élément de guidage (24) comporte une piste de guidage (27) au moins partiellement circulaire et contre laquelle le deuxième élément de guidage (26) est susceptible de venir en appui.

9. Module lumineux (2) selon la revendication précédente, **caractérisé en ce que** la piste de guidage (27) est formée à la périphérie d'un bossage cylindrique (28) agencé en saillie d'une face interne (30) du support (10) tournée vers les éléments de déviation optique (6).

10. Module lumineux (2) selon la revendication précédente, **caractérisé en ce que** la source de lumière (8) est disposée sur une face d'extrémité transversale (33) du bossage cylindrique (28).

11. Module lumineux (2) selon l'une des revendications 8 à 10, **caractérisé en ce que** la source de lumière (8) est disposée au voisinage du centre de l'arc de cercle définissant le contour de la piste de guidage (27) au moins partiellement circulaire.

12. Module lumineux (2) selon la revendication 8, **caractérisé en ce que** la piste de guidage (27) est formée par une face d'une paroi annulaire qui s'étend en saillie d'une face interne (30) du support (10) et à l'intérieur de laquelle est disposée la source de lumière (8).

13. Module lumineux (2) selon l'une des revendications précédentes, **caractérisé en ce que** les éléments de déviation optique (6) consistent en un réflecteur de forme sensiblement elliptique, la source de lumière (8) étant disposée sensiblement au voisinage d'un premier foyer dudit réflecteur.

14. Module lumineux (2) selon l'une des revendications précédentes, **caractérisé en ce que** les éléments de déviation optique (6) sont par ailleurs montés mobiles en rotation autour d'un axe de rotation additionnel (54) distinct dudit axe de rotation (4).

15. Dispositif lumineux, notamment d'éclairage et/ou de signalisation pour véhicule automobile, comprenant au moins un module lumineux (2) selon l'une des revendications précédentes.
